# DEMANDE DE BREVET EUROPEEN

(11) **EP 3 258 543 A1**
(43) Date de publication de la demande: **20.12.2017**
(21) Numéro de dépôt: 17174146.5
(22) Date de dépôt: 02.06.2017
(51) Int. Cl.: H01Q 15/00

(54) **ANTENNE WIFI COMPACTE A REFLECTEUR EN METAMATERIAU**

(30) Priorité: 14.06.2016 FR 1655504
(71) Demandeur: Parrot Drones, 75010 Paris (FR)
(72) Inventeur: ARIAS, Arnaud, 91300 Massy (FR)
(74) Mandataire: Dupuis-Latour, Dominique

(57) **Abrégé**

L'antenne (10) comprend un élément planaire actif (100) formant radiateur, couplé à une entrée d'un circuit récepteur et/ou à une sortie d'un circuit émetteur, et un élément planaire passif (200) formant réflecteur. L'élément planaire passif (200) est formé par une structure périodique de type métamatériau comprenant un réseau de cellules résonantes, notamment des cellules de type à anneaux concentriques coupés complémentaires CSRR, *Complementary Split-Ring Resonator.* Un support (300) en matériau diélectrique en forme de clip supporte l'élément planaire actif (100) et l'élément planaire passif (200).

## Description

L'invention concerne le pilotage à distance d'appareils motorisés, ci-après désignés généralement sous la dénomination de "drones", et plus précisément les antennes de radiocommunication utilisées par ces appareils pour leur pilotage à distance.

Il peut s'agir notamment de drones volants, à voilure tournante ou à voilure fixe. L'invention n'est toutefois pas limitée au pilotage et à l'échange de données avec des appareils volants, et elle peut s'appliquer aussi bien à des appareils roulants évoluant sur le sol sous le contrôle d'un opérateur distant, le terme de "drone" devant être entendu dans son acception la plus générale.

Des exemples typiques de drones volants sont le *Bebop* de Parrot SA, Paris, France, qui est un drone à voilure tournante de type quadricoptère, ou le *Disco,* également de Parrot SA, qui est un drone à voilure fixe de type aile volante. Un autre type de drone auquel peut s'appliquer l'invention est le *Jumping Sumo*, également de Parrot SA, qui est un jouet roulant et sauteur télécommandé.

Les demandes WO 2010/061099 A2, EP 2 364 757 A1, EP 2 450 862 A1 et EP 2 613 213 A1 (Parrot) décrivent le principe du pilotage d'un drone par l'intermédiaire d'un téléphone ou tablette multimedia à écran tactile et accéléromètres intégrés, par exemple un *smartphone* de type *iPhone* ou une tablette de type *iPad* de Apple Inc., exécutant un logiciel applicatif spécifique de télécommande tel que dans l'exemple ci-dessus l'application pour mobile *FreeFlight* de Parrot SA.

Ce téléphone ou cette tablette peut être éventuellement relayé par un équipement spécifique de télécommande tel que le *Skycontroller* de Parrot SA, qui est une console interfacée avec le téléphone ou la tablette, se présentant sous forme d'un boitier muni de deux poignées avec des manches à balai et divers boutons destinés à permettre un pilotage ergonomique par l'utilisateur à la manière d'une console de télécommande dédiée. L'équipement comprend en outre un émetteur/récepteur faisant fonction de relai entre le téléphone, la tablette et le drone, l'émetteur étant doté d'un amplificateur permettant d'augmenter la puissance rayonnée sur le canal radio utilisé entre la télécommande et le drone. Ces aspects de la communication radio entre console et drone sont décrits notamment dans le EP 3 020 460 A1 (Parrot).

De façon générale, un équipement de télécommande de drone incorpore les divers organes de contrôle nécessaires à la détection des commandes de pilotage et à l'échange bidirectionnel de données via une liaison radio de type réseau local sans fil WiFi (IEEE 802.11) ou *Bluetooth* directement établie avec le drone. Cette liaison radio bidirectionnelle comprend une liaison descendante (du drone vers la télécommande) pour transmettre des trames de données contenant un flux video issu d'une caméra embarquée par le drone, et des données de vol ou indicateurs d'état du drone, ainsi qu'une liaison montante (de la télécommande vers le drone) pour transmettre les commandes de pilotage.

On comprendra que la qualité de la liaison radio entre la télécommande et le drone est un paramètre essentiel, en particulier pour assurer une portée satisfaisante. Les volumes de données transmis sont en effet importants, notamment du fait du besoin très élevé en débit video de la liaison descendante (typiquement de l'ordre de 2,5 à 3 Mbit/seconde), de sorte que toute dégradation de la qualité de la liaison radio aura un impact sur la qualité de la transmission et par voie de conséquence sur la portée radio, avec en outre un risque de pertes sporadiques affectant les données et les commandes échangées.

Au niveau du drone, la liaison radio utilise une ou plusieurs antennes incorporées au drone qui, en réception, captent les signaux émis par l'équipement de télécommande et, en émission, rayonnent la puissance du circuit émetteur HF supportant la liaison descendante, notamment pour la transmission des signaux de flux video et de données de vol.

L'invention concerne précisément ce type d'antenne qui est utilisée par le drone.

Actuellement, les drones utilisent généralement comme antenne WiFi des antennes de type dipôle, notamment formées de deux dipôles couplés à deux bornes d'antenne respectives de la puce radio WiFi.

Cette structure d'antenne à base de dipôles a cependant pour inconvénient un diagramme de rayonnement assez irrégulier, présentant notamment des creux de gain dans l'axe du dipôle.

De plus, si l'on associe au dipôle un réflecteur pour en optimiser le diagramme de rayonnement, pour présenter une efficacité maximale ce réflecteur doit être placé à une distance de λ/2 de l'élément rayonnant (soit environ 60 mm pour une fréquence située aux alentours de 2,4 GHz) et avoir une taille d'environ λ (soit environ 120 mm), ce qui rend l'ensemble encombrant et difficile à intégrer dans un équipement très compact tel qu'un drone.

Le but de l'invention est de proposer une nouvelle structure de dispositif d'antenne typiquement adaptée aux bandes de fréquences centimétriques telles que les bandes WiFi, qui pallie les inconvénients ci-dessus exposés des antennes utilisées jusqu'à présent, notamment en procurant un diagramme de rayonnement à la fois étendu et homogène dans un secteur très large d'un demi-espace hémisphérique.

En particulier, il s'agit de concevoir une antenne dont les propriétés de rayonnement soient le moins possible affectées par d'éventuels éléments métalliques situés à l'arrière de l'antenne, c'est-à-dire dans le demi-espace hémisphérique opposé à celui dans lequel rayonne l'antenne.

Un autre but de l'invention est de concevoir une telle structure d'antenne dont les dimensions réduites lui permettent de s'intégrer facilement dans un drone, sans élément saillant qui augmenterait la trainée du drone, et qui ne représente pas une masse significative susceptible d'alourdir inutilement le drone.

L'idée de base de l'invention consiste à utiliser comme élément passif de l'antenne (réflecteur) une structure de type dit "métamatériau", terme qui désigne en fait une structure périodique ou réseau de cellules résonantes qui, fonctionnellement, se comporte en fait comme un matériau homogène mais présente des propriétés électromagnétiques originales que l'on ne pourrait pas retrouver dans un matériau naturel. En particulier, du point de vue de l'électromagnétisme, les métamatériaux sont susceptibles de présenter à la fois une permittivité (ε) négative et une perméabilité (µ) négative.

Il a été proposé d'utiliser des structures périodiques de type métamatériau pour la réalisation d'éléments actifs d'antenne (radiateurs), par exemple comme cela est décrit par T Khanum et al., "A Compact Wideband Sier-pinski Antenna Loaded with Metamaterial", International Conference on Electrical, Electronics, and Optimization Techniques (ICEEOT), 2016, pp.348-351.

Le WO 2016/047779 A1 décrit un autre exemple d'antenne comprenant un élément actif constitué d'un réseau de cellules de métamatériau agencé à distance d'un plan de masse métallique.

L'utilisation de métamatériaux a été également proposée pour réaliser des plans de masse d'antenne.

Dans le cadre de la présente invention, le métamatériau n'est utilisé ni comme élément actif d'antenne ni comme plan de masse, mais comme réflecteur, c'est-à-dire comme élément purement passif.

Le KR 2015 0107434 A décrit une antenne utilisant comme réflecteur (élément passif) un plan de masse métallique devant lequel est disposé, à faible distance, un réseau de cellules déphaseuses imprimées constituant un métamatériau. Le métamatériau a pour effet de modifier la propagation des ondes au voisinage du plan métallique et de procurer une directivité très élevée. Il s'agit en fait dans cette proposition de remplacer le réflecteur en forme d'assiette creuse des antennes paraboliques classiques par un réflecteur plat procurant néanmoins un diagramme de rayonnement très directif, au moins autant qu'avec les antennes paraboliques conventionnelles. Un tel réflecteur est aisé à intégrer et de plus, s'il est réalisé sur un support souple, peut être enroulé pour faciliter le transport de l'antenne.

Le but recherché par la présente invention est exactement opposé, dans la mesure où le problème consiste à obtenir, comme exposé plus haut, un diagramme de rayonnement large et homogène, donc le moins directif possible, dans un secteur très étendu d'un demi-espace hémisphérique (typiquement un secteur d'au moins 140° d'ouverture).

À cet effet, l'invention propose une structure d'antenne compacte pour bandes de fréquences centimétriques, notamment des bandes WiFi, comprenant comme dans le KR 2015 0107434 A précité un élément actif formant radiateur couplé à une entrée d'un circuit récepteur et/ou à une sortie d'un circuit émetteur, et un élément planaire passif comprenant une structure périodique en métamatériau avec un réseau de cellules résonantes, ces cellules résonnant à une fréquence de résonance prédéterminée comprise dans au moins l'une desdites bandes de fréquences.

De façon caractéristique de l'invention, l'élément actif est un élément planaire comprenant au moins un dipôle accordé sur une fréquence située dans l'une desdites bandes de fréquences, et la structure périodique en métamatériau forme un réflecteur s'étendant dans un second plan parallèle à un premier plan supportant l'élément planaire actif et situé à distance de celui-ci, le diagramme de rayonnement de l'antenne étant un diagramme sectorisé à grande ouverture.

Selon diverses caractéristiques subsidiaires avantageuses :
- le l'élément planaire passif formant réflecteur est dépourvu de plan de masse coopérant avec le réseau de cellules résonantes du métamatériau ;
- l'antenne comprend en outre un support en matériau diélectrique en forme générale de clip ou d'agrafe, comprenant ledit premier plan supportant l'élément planaire actif, ledit second plan supportant l'élément planaire passif, et un élément central reliant lesdits premier et second plans ;
- les cellules résonantes sont des cellules de type à anneaux concentriques coupés SRR, *Split-Ring Resonator*, tout particulièrement des cellules de type à anneaux concentriques coupés complémentaires CSRR, *Complementary Split-Ring Resonator* ;
- la structure périodique en métamatériau comprend un réseau de deux colonnes de cellules résonantes ;
- la distance séparant le premier plan et le second plan du support est inférieure à 10 % d'une demi-longueur d'onde correspondant à ladite fréquence de résonance prédéterminée, en particulier cette distance est inférieure à 8 mm pour une fréquence de résonance prédéterminée située dans la bande 2,4 GHz ;
- l'élément planaire actif comprend un premier dipôle conformé en U, accordé sur une fréquence située dans une première bande desdites bandes de fréquences, avantageusement complété par un second dipôle conformé en T, accordé sur une fréquence située dans une seconde bande desdites bandes de fréquences, la seconde bande étant différente de ladite première bande de fréquences ; et
- le diagramme de rayonnement de l'antenne est un diagramme à grande ouverture en secteur de tore inclus dans un domaine hémisphérique, avantageusement une ouverture d'au moins 140°.

On va maintenant décrire un exemple de mise en oeuvre de la présente invention, en référence aux dessins annexés où les mêmes références désignent d'une figure à l'autre des éléments identiques ou fonctionnellement semblables.
La Figure 1 est une vue perspective de trois-quarts avant d'une antenne selon l'invention.
La Figure 2 est une vue latérale en élévation de l'antenne de la Figure 1.
La Figure 3 est une vue perspective, de trois-quarts arrière, de l'antenne des Figures 1 et 2.
La Figure 4 montre, isolément, l'élément planaire actif formant radiateur de l'antenne des Figures 1 à 3.
La Figure 5 montre, isolément, l'élément planaire passif formant réflecteur de l'antenne des Figures 1 à 3.
La Figure 6 illustre la manière d'intégrer dans le corps d'un drone une antenne telle que celle décrite aux Figures 1 à 3.
La Figure 7 est une vue agrandie de la Figure 6, montrant le détail de l'antenne et la manière dont celle-ci est configurée par rapport aux divers éléments du drone.
La Figure 8 est un diagramme montrant la variation du paramètre S₁₁, décrivant le comportement électrique de l'antenne de l'invention, en fonction de la fréquence d'émission/réception.

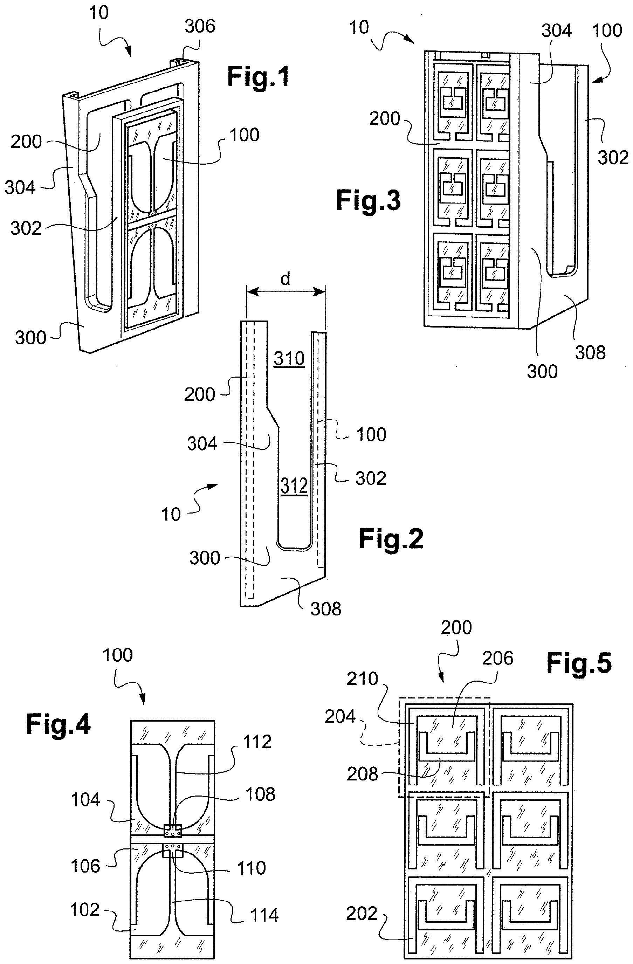

Les Figures 1 à 5 illustrent un exemple de réalisation de l'antenne de l'invention qui, comme on l'a indiqué plus haut, est particulièrement bien adaptée aux bandes de fréquences centimétriques telles que les bandes WiFi (2,40 GHz-2,4835 GHz et 5,15 GHz-5,85 GHz).

Cette application, si elle est particulièrement avantageuse car elle répond à des problèmes précis notamment dans le domaine des antennes pour drones, n'est toutefois pas limitative, et la configuration d'antenne de l'invention peut être utilisée dans d'autres domaines et pour d'autres applications.

L'antenne 10 selon l'invention est illustrée sous divers angles sur les Figures 1 à 3.

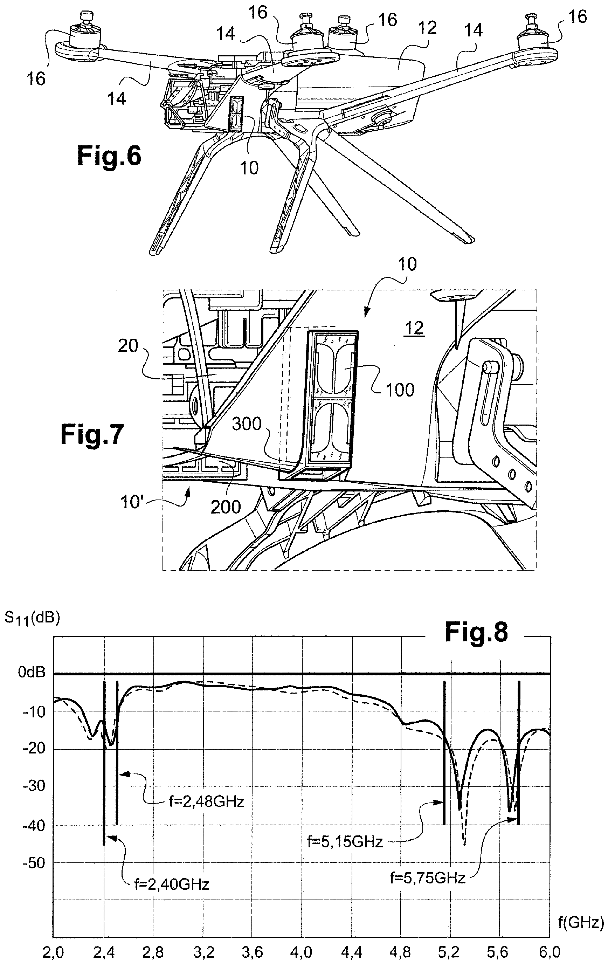

Cette antenne 10 est essentiellement formée de deux éléments d'antenne 100, 200, à savoir un élément planaire actif formant radiateur 100 (représenté isolément Figure 4) et un élément planaire passif formant réflecteur 200 (représenté isolément Figure 5). Ces deux éléments 100, 200 sont agencés l'un par rapport à l'autre dans une configuration géométrique précise grâce à un élément 300 en matériau diélectrique formant support, qui définit l'éloignement, le parallélisme et le centrage des éléments 100 et 200 l'un par rapport à l'autre. L'élément support 300 permet également, comme on le verra plus loin en référence aux Figures 6 et 7, un montage aisé sur un équipement, par exemple un drone, utilisant cette antenne. Les éléments 100 et 200 sont avantageusement réalisés sous forme planaire ou *patch* par gravure d'une surface conductrice d'une carte de circuit imprimé (PCB) de manière à former un motif particulier conducteur voulu définissant l'élément d'antenne.

Ainsi, l'élément actif formant radiateur 100 est réalisé à partir d'un PCB 102 sur laquelle des motifs métallisés ont été formés de manière à définir un premier dipôle 104, 106 qui est couplé en 108, 110 à une entrée d'un circuit récepteur et/ou à une sortie d'un circuit émetteur (l'antenne étant destinée indifféremment à l'émission ou à la réception de signaux radiofréquence).

Ce premier dipôle 104, 106 est avantageusement conformé, comme dans l'exemple illustré, de manière à présenter une forme en U, ce qui permet d'élargir la bande passante autour de la fréquence centrale et également de réduire la taille en largeur de ce dipôle. Ce premier dipôle 104, 106 est accordé sur une première bande de fréquence, par exemple la bande inférieure WiFi des 2,4 GHz (bande des fréquences comprises entre 2,40 et 2,4835 GHz).

L'élément 100 comporte également un second dipôle 112, 114, avantageusement configuré en forme de T, accordé sur une seconde bande de fréquence, par exemple la bande supérieure WiFi des 5 GHz (fréquences de 5,15 GHz à 5,85 GHz).

L'élément passif formant réflecteur 200 est, de façon caractéristique de l'invention, constitué par une simple structure de type "métamatériau", terme qui désigne comme indiqué en introduction une structure périodique ou réseau de cellules résonantes qui, fonctionnellement, se comporte en fait comme un matériau homogène mais présente des propriétés électromagnétiques originales que l'on ne pourrait pas retrouver dans un matériau naturel - notamment une permittivité (ε) négative et une perméabilité (µ) négative. On notera que le métamatériau constitue à lui seul le réflecteur de l'antenne, qui ne comporte pas de plan de masse ou élément fonctionnellement analogue.

La Figure 5 illustre isolément, pour constituer cet élément passif, une structure périodique de type métamatériau particulièrement bien adaptée à l'utilisation envisagée d'antenne WiFi en association avec l'élément actif 100 décrit plus haut.

L'élément passif formant réflecteur 200 est réalisé sur un PCB 202 sur lequel ont été gravés des motifs permettant de définir un réseau de cellules identiques 204, dans l'exemple illustré un réseau de deux colonnes de trois cellules 204.

Chaque cellule 204 comprend une métallisation 206 gravée de manière à définir un élément résonant 208, chaque cellule résonnant à une fréquence de résonance prédéterminée.

Les cellules 204 peuvent être des cellules du type à anneaux concentriques coupés SRR, *Split-Ring Resonator*, où le fait que l'anneau soit fendu procure une résonance à une longueur d'onde très supérieure au diamètre de l'anneau, avec donc une possibilité de miniaturisation très importante.

De préférence, les cellules 204 utilisées dans le cadre de l'invention sont des cellules du type à anneaux concentriques coupés complémentaires, CSRR, *Complementary Split-Ring Resonator*, qui présentent le double avantage de pouvoir rapprocher l'élément réflecteur 200 plus près de l'élément rayonnant 100 qu'avec des cellules SRR (où c'est le champ électrique qui résonne), et de pouvoir également réduire la taille d'ensemble du réflecteur.

Les cellules CSRR 204 peuvent être aussi bien des cellules avec des anneaux ronds que carrés, le choix d'anneaux carrés (comme dans l'exemple illustré) procurant une compacité plus élevée du réflecteur 200.

La dimension de chaque cellule est calculée de manière à résonner à une fréquence précise, qui, dans le cas illustré, est une fréquence située dans la bande WiFi des 2,4 GHz (le fait que les cellules CSRR ne résonnent pas spécifiquement dans la bande des 5 GHz est en fait sans influence notable sur le résultat d'ensemble obtenu).

La dimension d'ensemble de l'élément réflecteur 200, qui conditionne notamment le nombre de colonnes de cellules CSRR 204 du réseau et le nombre de cellules dans chaque colonne, est déterminée en fonction des dimensions de l'élément actif rayonnant 100 de manière que les dimensions de l'élément réflecteur 200 soient supérieures à celles de l'élément rayonnant 100.

En particulier, dans la mesure où avec la configuration décrite on est en présence d'un champ élevé aux extrémités du dipôle, il est nécessaire que la dimension hors-tout du réflecteur englobe au moins la longueur du dipôle rayonnant.

De plus, le fait de disposer d'un réflecteur de dimension plus étendue que celles de l'élément rayonnant 100 procure une meilleure protection vis-à-vis des effets indésirables que pourrait avoir l'environnement proche (pièces métalliques, etc.) sur le diagramme de rayonnement global de l'antenne.

Dans l'exemple illustré le réflecteur est constitué de deux colonnes de trois cellules CSRR 204, pour une dimension hors-tout très réduite de λ/6 x λ/4, soit 22 mm x 33 mm à 2,4 GHz, ici associé à un élément rayonnant 100 de dimensions 10 mm x 29 mm, conservant à l'ensemble un caractère extrêmement compact.

Les deux éléments 100 et 200 que l'on vient de décrire sont maintenus parallèles et à distance l'un de l'autre par une pièce formant support 300 en matériau diélectrique, par exemple en matière plastique.

La pièce 300 peut notamment avoir une forme de U, avec deux branches parallèles 302, 304 recevant les éléments 100 et 200 de l'antenne par exemple dans des logements appropriés (voir par exemple par la rainure 306 visible sur la Figure 1 pour le réflecteur 200).

L'écartement d entre l'élément actif 100 formant radiateur et l'élément passif 200 formant réflecteur est de l'ordre de λ/15, soit 7 à 8 mm pour une antenne accordée sur la bande des 2,4 GHz.

On dispose ainsi d'une structure extrêmement compacte, avec un réflecteur beaucoup plus proche du radiateur que dans une structure conventionnelle (en effet, dans une structure conventionnelle, l'écartement entre réflecteur et radiateur doit être de l'ordre d'une demi-longueur d'onde, soit environ 50 à 60 mm pour une fréquence située aux alentours de 2,4 GHz et correspondant à une demi-longueur d'onde de 62,5 mm).

Les deux branches 302, 304 du U sont réunies par un élément central 308 donnant à l'ensemble une forme générale de clip ou d'agrafe aisément emboitable sur une paroi d'un équipement, comme dans la configuration que l'on décrira plus bas en référence aux Figures 6 et 7. L'évidement central du clip comporte alors avantageusement une partie distale élargie 310 pour faciliter l'insertion du clip et une partie proximale plus étroite 312 assurant le pincement de l'antenne 10 avec l'élément sur lequel elle est clippée.

Les Figures 6 et 7 illustrent un exemple d'intégration d'une antenne 10 telle que celle que l'on vient de décrire en référence aux Figures 1 à 5, dans un équipement tel qu'un drone.

Le drone illustré est de type quadricoptère, avec un corps 12 et quatre bras 14 portant chacun un moteur 16 susceptible d'entrainer en rotation une hélice.

Dans l'exemple illustré, le drone est muni de deux antennes latérales 10, 10' situées à l'avant du drone, chaque antenne ayant le support en forme de U clippée sur une paroi 18 du corps 12 du drone. La paroi 18 est en matériau diélectrique, par exemple en matière plastique.

La partie active 100 de l'antenne formant radiateur est tournée vers l'extérieur, et le réflecteur 200 se trouve interposé entre, d'une part, l'élément rayonnant actif 100 et, d'autre part, diverses pièces métalliques 20 du drone qui, sinon, seraient susceptibles d'influer sur la géométrie du diagramme de rayonnement de l'antenne.

On notera que par ailleurs que cette configuration, outre son caractère extrêmement compact, permet du fait de la forme plane une intégration aisée dans un environnement mécanique complexe, sans compromis sur les performances radioélectriques de l'antenne.

Des mesures effectuées avec l'antenne de l'invention montrent que celle-ci rayonne dans un diagramme sectorisé à grande ouverture incluse dans un demi-espace hémisphérique, typiquement un diagramme sectorisé d'au moins 140° d'ouverture environ, avantageusement en outre de forme torique, ceci avec un niveau de rayonnement relativement homogène sur l'ensemble de ce secteur.

En munissant un drone de trois antennes selon l'invention (les antennes 10 et 10', plus une troisième antenne disposée dans une région ventrale du drone), on peut assurer avec ces trois antennes sectorisées à 140° une communication satisfaisante entre un drone et un appareil de télécommande distant, avec des performances radio homogènes quelle que soit l'orientation du drone par rapport à l'appareil de télécommande.

Le diagramme de rayonnement limité à un demi-espace hémisphérique permet de plus de rendre l'antenne insensible aux éléments métalliques situés derrière le réflecteur, à la différence des antennes WiFi habituellement utilisées qui subissent une dégradation notable de la puissance rayonnée et de l'homogénéité du diagramme de rayonnement du fait de ces éléments perturbateurs, ce qui peut conduire à des communications très bruitées entre le drone et l'appareil de télécommande dans certaines configurations de vol.

En d'autres termes, le réflecteur désensibilise l'élément actif de l'antenne des perturbations susceptibles d'être introduites par les pièces métalliques et autres situées derrière l'antenne.

Les mesures montrent également que les propriétés que l'on vient d'évoquer du diagramme sont sensiblement équivalentes dans les deux bandes WiFi 2,4 GHz et 5 GHz.

La Figure 8 est un diagramme montrant la variation du paramètre S₁₁ décrivant le comportement électrique de l'antenne de l'invention (ensemble radiateur + réflecteur) en fonction de la fréquence d'émission/réception dans les deux bandes WiFi 2,40-2,48 GHz et 5,15-5,75 GHz, pour les deux antennes situées à gauche et à droite du drone (comme on peut le voir, même si le contexte électromagnétique est légèrement différent pour les deux ensembles, le S₁₁ reste stable). Plus précisément, le pic de résonance du réflecteur seul correspond au premier creux de la courbe dans la bande des 2,40 GHz, tandis que celui du radiateur seul correspond au second creux de cette même courbe.

## Revendications

1. Une antenne compacte (10) pour bandes de fréquences centimétriques, notamment pour bandes WiFi, comprenant :
- un élément actif (100) formant radiateur, couplé à une entrée d'un circuit récepteur et/ou à une sortie d'un circuit émetteur ; et
- un élément planaire passif (200) formé par une structure périodique en métamatériau comprenant un réseau de cellules résonantes (204), lesdites cellules résonnant à une fréquence de résonance prédéterminée comprise dans au moins l'une des desdites bandes de fréquences,
**caractérisé en ce que** :
- l'élément actif est un élément planaire (100) comprenant au moins un dipôle (104, 106) accordé sur une fréquence située dans l'une desdites bandes de fréquences, et
- la structure périodique en métamatériau forme un réflecteur s'étendant dans un second plan (304) parallèle à un premier plan (302) supportant l'élément planaire actif (100) et situé à distance (d) de celui-ci, le diagramme de rayonnement de l'antenne étant un diagramme sectorisé à grande ouverture.

2. L'antenne de la revendication 1, dans laquelle l'élément planaire passif formant réflecteur est dépourvu de plan de masse coopérant avec le réseau de cellules résonantes du métamatériau.

3. L'antenne de la revendication 1, comprenant en outre :
- un support (300) en matériau diélectrique en forme générale de clip ou d'agrafe, comprenant ledit premier plan (302) supportant l'élément planaire actif (100), ledit second plan (304) supportant l'élément planaire passif (200), et un élément central (308) reliant lesdits premier et second plans (302, 304).

4. L'antenne de la revendication 1, dans laquelle lesdites cellules résonantes (204) sont des cellules de type à anneaux concentriques coupés SRR, *Split-Ring Resonator.*

5. L'antenne de la revendication 4, dans laquelle lesdites cellules résonantes (204) sont des cellules de type à anneaux concentriques coupés complémentaires CSRR, *Complementary Split-Ring Resonator* (208, 210).

6. L'antenne de la revendication 1, dans laquelle ladite structure périodique en métamatériau comprend un réseau de deux colonnes de cellules résonantes (204).

7. L'antenne de la revendication 2, dans laquelle la distance (d) séparant le premier plan (302) et le second plan (304) du support (300) est inférieure à 10% d'une demi-longueur d'onde correspondant à ladite fréquence de résonance prédéterminée.

8. L'antenne de la revendication 7, dans laquelle la distance (d) séparant le premier plan (302) et le second plan (304) du support (300) est inférieure à 8 mm pour une fréquence de résonance prédéterminée située dans la bande 2,4 GHz.

9. L'antenne de la revendication 1, dans laquelle l'élément planaire actif (100) comprend un premier dipôle (104, 106) conformé en U, accordé sur une fréquence située dans une première bande desdites bandes de fréquences.

10. L'antenne de la revendication 9, dans laquelle l'élément planaire actif (100) comprend un second dipôle (112, 114) conformé en T, accordé sur une fréquence située dans une seconde bande desdites bandes de fréquences, la seconde bande étant différente de ladite première bande de fréquences.

11. L'antenne de la revendication 1, dans laquelle le diagramme de rayonnement de l'antenne est un diagramme en secteur de tore inclus dans un domaine hémisphérique.

12. L'antenne de la revendication 12, dans laquelle l'ouverture dudit diagramme est d'au moins 140°.
